# EUROPEAN PATENT APPLICATION

(11) **EP 3 216 569 A1**
(43) Date of publication of application: **13.09.2017**
(21) Application number: 16305254.1
(22) Date of filing: 07.03.2016
(51) Int. Cl.: B25J 9/16, B25J 9/08

(54) **MODULAR MANUFACTURING OF A ROBOT**

(71) Applicant: Aldebaran Robotics, 75015 Paris (FR)
(72) Inventor: SMAL, Ludovic, 75015 PARIS (FR); SERRE, Julien, 75015 PARIS (FR)
(74) Representative: Hnich-Gasri, Naïma

(57) **Abstract**

There is disclosed a method of manufacturing a robot comprising the steps of discovering a plurality of generic components, said generic components being interconnected and non-functional in the robot; determining the spatial position of each generic component in the robot; retrieving respective firmware associated with each generic component; modifying a generic component into a specified component, by programming the firmware of said generic component with a said retrieved firmware. Described developments comprise the use of encryption mechanisms, the use of one or more bootloaders, the use of decentralized or distributed storage of firmware and the use of predefined hardware abstraction layers. Software and system aspects (e.g. multi-masters architectures) are described.

## Description

### Technical Field

This patent relates to the field of digital data processing and more particularly to methods and systems for manufacturing a robot.

### Background

Modern robots can be complex to manufacture. For example, a humanoid robot can require the design and assembly of numerous mechanical as well as electronic parts.

In existing robots, the same given function can be performed in several different manners. This lack of homogeneity and standardization leads to increased costs. For example, a simple operation such as enlightening a LED on a robot can be implemented in many different ways (i.e. in the electronics and the firmware).

### Summary

There is disclosed a method of handling (e.g. manufacturing, designing, assembling) a robot comprising the step of discovering a plurality of generic components, said generic components being interconnected and non-functional in the robot; determining the spatial position of each generic component in the robot; retrieving respective firmware associated with each generic component; modifying a generic component into a specified component, by flashing or programming the firmware of said generic component, with said retrieved firmware. Described developments comprise the use of encryption mechanisms, the use of one or more bootloaders, the use of decentralized or distributed storage of firmware and the use of predefined and/or preconfigured hardware abstraction layers. Software and system aspects (e.g. multi-masters architectures) are described.

Advantageously, the method according to the invention simplifies embedded electronics and associated firmware design, thereby diminishing upstream design constraints in the design development cycle of a robot.

Advantageously, embodiments of the invention reduce costs by providing economies of scale (few generic components produced at high volumes)

Advantageously, the method according to the invention reduces the required time to assemble parts to get a robot.

Advantageously, in some embodiments, software development efforts can be reused. What has been developed for a given model of a robot can be reused for another model, almost entirely. Only the functional difference can require a further development effort.

Advantageously, embodiments of the invention reduce constraints related to tests performed on manufactured robots. The different components being standardized and massively reused, less new unitary test are required (tests are valid for a given platform, for which systemic tests can be recommended).

Advantageously, embodiments of the invention allow the rapid creation of new robots by reusing existing and standardized modules but by re-arranging them in a different order.

Advantageously, embodiments of the invention allow to easily add new functionalities to an existing model of a robot, without requiring deep changes in the architecture of the robot (i.e. software and/or hardware).

Advantageously, further positive aspects associated with embodiments of the invention comprise improved maintenance (broken parts can be easily, rapidly and cost effectively replaced).

Advantageously embodiments of the invention lead to faster evolution of robot models. If an improvement is brought on generic module, the rest of the robot will automatically benefit from it.

Advantageously, embodiments of the invention reduce testing requirements (tests are required on a limited set of components).

Advantageously, there is disclosed a highly reconfigurable robot.

Advantageously, described security mechanisms enable to control (e.g. forbid) unauthorized copies (for example of firmware). Beyond aspects of Digital Rights Management, described security mechanisms also can ensure that the robot assembled according to the invention is reliable (i.e. safe, genuine). Interconnected parts are each reliable, the global robot design as well.

### Brief description of drawings

Embodiments of the present invention will now be described by way of example with reference to the accompanying drawings in which like references denote similar elements, and in which:
Figure 1 illustrates an example of architecture of a generic component according to the invention;
Figure 2 shows some examples of mechanical parts associated with generic components having being specified according to an embodiment of the invention;
Figure 3 illustrates some aspects of the method of manufacturing a robot, by specifying generic components;
Figure 4 shows a system view associated with the method of manufacturing a robot by specifying generic components (i.e. allocation of functions);
Figure 5 shows examples of steps of a method according to the invention.

### Detailed description

There are disclosed methods and systems of handling (e.g. manufacturing, designing, assembling) a robot (e.g. a humanoid robot) by specifying discovered generic components of the robot into specified components. Developments comprise the use of predefined firmware and/or configurable/configured firmware to program or reprogram components of the robot, the use of one or more bootloaders, the use of decentralized or distributed storage of firmware and the use of predefined and/or preconfigured hardware abstraction layers. Software and system aspects (e.g. multi-masters architectures) are described.

As used herein, a "component" designates a part of a robot. Depending on the context, a "component" also can be named "part", "circuit", "board" or "block". A "generic" component can also be named a "base" component. Off the shelf, a "generic" component is not functional. It is unspecified.

In an embodiment, there is disclosed a method of handling (e.g. manufacturing, designing, assembling) a robot, the method comprising the steps of discovering a plurality of generic components, said generic components being interconnected and in a non-functional (or non-working state) in the robot (or the envisioned robot); determining the spatial position of each generic component in the robot; retrieving respective firmware associated with each generic component (selected among a plurality of preconfigured firmware); optionally modifying or configuring said firmware, for example as a function of a requirement associated with a component, modifying a generic component into a specified component by programming or flashing the firmware of said generic component with said retrieved firmware.

In a development, the method further comprises the step of retrieving special requirements associated with a generic component. In a development, the method comprises the step of receiving at least one special requirement associated with a component (at least one target or destination component), said requirement for example comprising configuration parameters (for example by reference to a hardware abstraction layer), and further comprising the step of configuring the retrieved respective firmware associated with said generic component, for example depending on the special requirement (e.g. as a function of the special requirement). Correspondence can be static and/or dynamic (e.g. also depending on other special or specific requirement received for other parts of the robot)

In a development, the firmware flashing or programming step is protected by using (or with) an encryption mechanism (or scheme).

In a development, the encryption mechanism is a symmetric encryption scheme.

In a development, the encryption mechanism is an asymmetric encryption scheme.

In a development, the storage of the respective firmware associated with the one or more generic components is decentralized and/or distributed (the step of storing the respective firmware associated with the one or more generic components is performed in a decentralized and/or distributed manner).

In a development, the step of determining the spatial position of each generic component is performed by an external logic. In a development, the step of determining the spatial position of each generic component is performed by reference to a predefined map, for example as defined in a predefined hardware abstraction layer.

In a development, the step of further configuring a retrieved (generic or specific) firmware is performed by reference to a predefined hardware abstraction layer.

In a development, the step of determining the spatial position of each generic component is performed by iterative negotiations between generic component peers.

There is disclosed a computer program comprising instructions for carrying out the steps of the method when said computer program is executed on a suitable computer device.

There is disclosed a system comprising means adapted to carry out the steps of the method.

In a development, the system comprises one or more generic components, said generic components being interconnected and in non-functional state in the robot; and a generic component comprises (a) hardware electronics, said hardware electronics comprising a (i) non volatile memory adapted to store firmware instructions, which when executed by a suitable processor cause said processor to perform one or more steps of the method and a (ii) boot loader (for example conditionally authorizing firmware flashing and/or deletion).

In a development, the system further comprises a (b) mechanical part.

In a development, the mechanical part is associated with an articular chain selected from the group comprising a shoulder or an elbow or a wrist or a neck.

In a development, a generic component is configured to interact with external sensors and actuators.

In a development, the system comprises a global master device controlling a plurality of slave devices, said slave devices comprising one or more generic specified components.

In a development, the system comprises a plurality of interconnected global master devices.

There is disclosed a modular architecture to design and assemble a robot (for example a humanoid robot or more generally a mobile robot).

There is disclosed a mechanism of specifying one or more components or circuits constitutive of a robot from a generic (unspecified) state to a specific (specified state), said specialization (specification) - at least partially - depending on the respective locations or positions of said one or more components in the robot (for example considering one or predefined final architectures of the considered robot). The step of specifying a circuit can comprise a plurality of steps. For example, it can comprise the step of allocating a function to said circuit, for example by selecting a firmware among a plurality of predefined firmware, by optionally modifying said selected firmware (for example by reference to an hardware abstract layer, acronym HAL; for example if one or more special requirements of the destination circuit are received and/or identified), and by flashing the selected appropriate firmware (possibly modified and/or configured) to the circuit.

In some embodiments, said locations can be determined by a third party (e.g. human operator, external logic) and/or be self-discovered (by peer-to-peer negotiations).

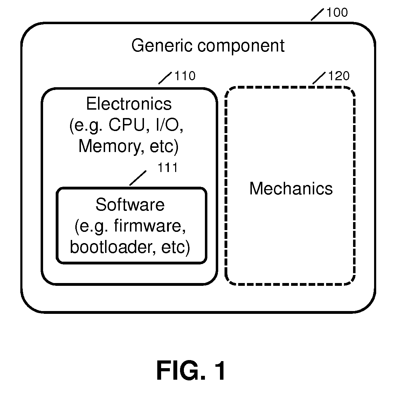

Figure 1 shows an exemplary representation of a generic component according to the invention.

The property of "genericity" of a component according to the invention presents similarities with the property of "potency" in biology. In cell biology indeed, a "totipotent" or "omnipotent" stem cell can differentiate into embryonic cell types, which in turn can lead to a complete and viable organism. An equivalent for an electromechanical counterpart in a robot is generally out of reach. A "pluripotent" stem cell can differentiate into nearly all cell types. The equivalent hardly can be obtained in robotics. A "multipotent" stem cell can differentiate into a number of cell types, but only those of a closely related family of cells. Depending on the final architecture of the robot being manufactured, equivalent generic components can be defined (e.g. a low-level generic component can be specified to differentiate into a limited but significant number of robotic parts. An "oligopotent" stem cell can differentiate into only a few cell types, such as lymphoid or myeloid stem cells. Again, reasonable and feasible engineering can define such limited differentiations. A "unipotent" cell can produce only one cell type. A counterpart in robotics does not generally present a particular interest at this level. As a conclusion, a generic component according to the invention can act like as a "multipotent" cell (at best) or an "oligopotent" cell (a minima), or at intermediary states (robotic particularities).

In an embodiment of the invention, a generic component is manufactured according to a predefined "reference design" (i.e. teleology, knowing the finality or the objective). Such a reference design can correspond to an "image of the machine". Several references designs are possible (a selection can be performed). Such reference designs can correspond to underlying potency schemes (common denominators).

Regarding its structural features, a generic component 100 comprises hardware (110, 120) and software 111 (e.g. a bootloader). Hardware comprises electronics (CPU, memory, I/O, etc) and can optionally comprise mechanical parts 120.

Regarding electronics, a generic component (unspecified state) comprises basic elements for communication. In particular, a generic component comprises a "boot loader". In functional terms, each generic component (or at least a part of the generic components present in the robot) comprises - or as access to - data enabling to use it (for example, data such as the serial number, calibration data, etc.)

Regarding mechanical hardware, a generic component can comprise (optional) mechanical parts 120 or be adapted to be coupled (or to interact) with predefined mechanical devices or parts of a robot (i.e. sensors and/or actuators), not shown.

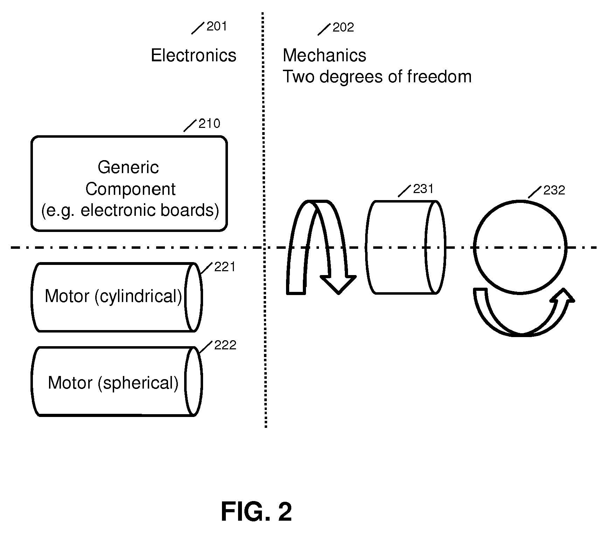

Figure 2 shows some examples of mechanical parts associated with generic components having being specified according to an embodiment of the invention;

The figure shows a generic component 210 interacting with a physical element 202 (CSAM for Cylindrical Spherical Actuator Module). The physical element 202 for example comprises a cylindrical motor 221 and spherical motor 222 (system presenting two degrees of freedom 231 and 232).

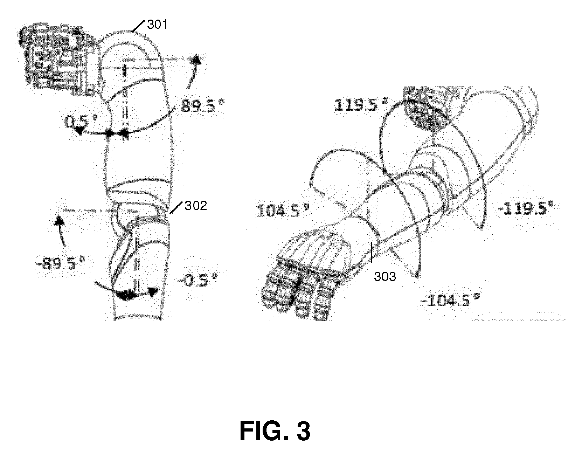

Figure 3 shows examples of specified components.

Depending on its final location in the robot, said combination of a generic component 210 with a mechanical part 202 for example can form a shoulder 301 or an elbow 302 or a wrist 303 or a neck (not shown).

More generally, embodiments of the invention can be applied to parts associated with any number of degrees of freedom (i.e. significantly more complex parts).

A generic component (or part or circuit or board or block) potentially can achieve or perform several different tasks or functions. In an embodiment, not all possible functions desired in a robot are activable in a generic component. In order to save costs, desired functions to be implemented in a robot are structured in groups, i.e. a given species of a generic component comprises only a selection of activable functions.

For example, willing to provide a robot with a Light-emitting diode (LED), a generic component can indeed comprise a LED on its circuit, but said component can be "unaware" of its own capability before a specialization step. After a master device flashes the firmware (with a generic and/or a specific or configured firmware), the generic component becomes a specified component. In an embodiment, the specified component can directly control the LED on its own circuit. In an embodiment, the master device can directly control the LED on the circuit of the specified component (acting as a bridge or relay, i.e. transmitting communications). In an embodiment, the master device and the specified component can contribute both to the LED control.

In case of a hardware upgrade, the global master device for example can discover the one or more added components; a global mapping of the functions (in view of the capabilities of the respective circuits) can determine further flashing steps of the newly added one or more components (and/or the reconfiguration of existing components). New functionalities can be obtained (for example, a new configuration can be implemented in the firmware to be able to control more than one LED).

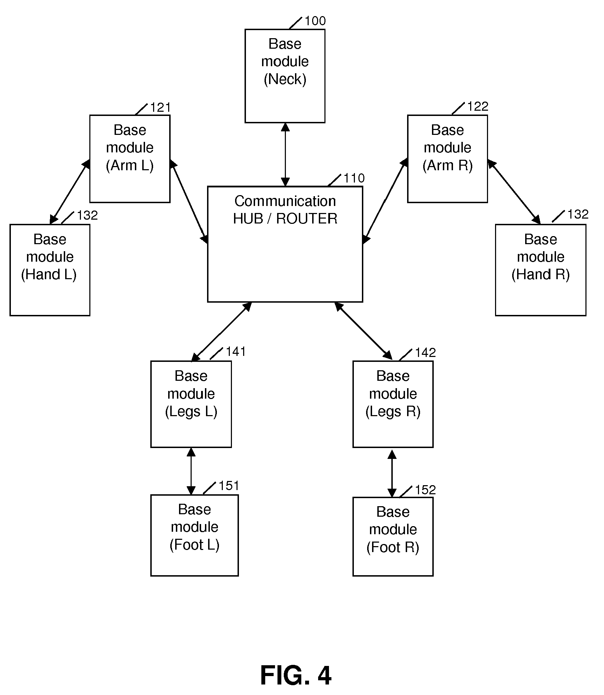

Figure 4 shows a system view associated with the method of manufacturing a robot by specifying generic components (i.e. allocation of a function to each discovered component or robot's part)

Using such generic modules, associated with different levels of abstraction, there is disclosed a method of manufacturing a robotic system.

In an embodiment, each module is first a generic module, i.e. is potentially capable of performing different functions. Said generic module is then assigned a particular function (or role), said assignment depending on the manufacturing process.

According to the invention, the different parts of a robot can be assembled without a predefined or otherwise rigid order. The effective position of each part will create the differentiation between parts and the different functions will be located depending on the real and effective positions of these different parts.

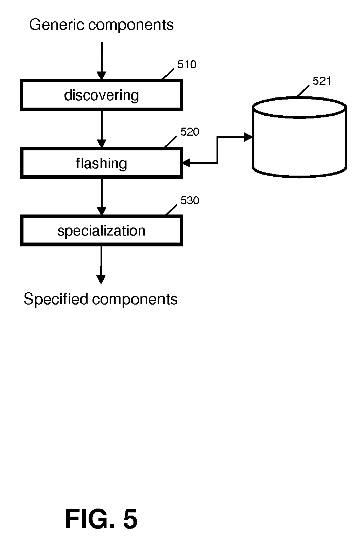

Figure 5 shows examples of steps of a method according to the invention.

In an embodiment, the method comprises a step 510 of discovering the different components or modules present in the robot being manufactured (e.g. determining the existence of the absence of one or more generic components).

The different generic component, as physical entities, are being positioned and electrically interconnected (by a human operator or by a manufacturer robot) on an assembly production line. Once the different parts of the robots are physically assembled (mechanically and electrically interconnected), the following steps are performed.

In an embodiment, the method comprises a step of enumerating said different components or modules. In an embodiment, said enumeration is obtained by conducting "automatic" interactions between the global master device and slave devices. In an embodiment, the enumeration is obtained by declarative or "manual" actions of a third party (e.g. a human operator or a manufacturing robot in a manufacturing facility)

In more details, the topology of the network ("nervous system"') is progressively determined. By discovery and enumeration, the respective positions of the different generic devices within the global system are determined.

Once said topology is known, the master device (which is a global master device, not a local one) allocates the different functions to the different generic components.

Once the topology of the robot is determined, the global master flashes (step 520) in turn the firmware of each and every generic component having been detected. The different firmware upgrades are thus performed as function of the local and global view of the robot system.

Said allocation is performed by reference to a so called "reference design" or hardware abstraction layer (HAL)" or "reference maps". In other words, one or more "image(s) of the machine" can be predefined.

The global master interacts with each of the generic components being assembled. In particular, each generic component is questioned to know whether it is associated with one or more special requirements.

For example, each generic component communicates its respective serial number, public encryption key if applicable, as well other information (for example, if it is in connection or in communication with the third party component with which some communication will be required).

The global master compares the mapping in progress to predefined reference maps, confirms the selection of a predefined robot model.

The global master device then determines a "mapping" i.e. a particular allocation of functions.

It then performs effective firmware updates. The global master - at once or progressively - communicates to each available generic component the respective appropriate firmware corresponding to the desired future function allocated to each of these generic components.

The allocation can be "static" (manual mode) or "dynamic" (constant flow of parts arriving on the production line and opportunistic allocations).

In an embodiment, firmware flashing operations are performed at once (when the entire topology is determined). In an embodiment, firmware flashing operations are performed on the fly (e.g. as soon as the suitable generic component is determined as available or accessible, it is flashed).

Part of the allocation or "specification" phase 530, the generic component (as a "stem cell") is "specified" or "specialized" into specified component. In an embodiment it receives data which lead to its specification or specialization: it receives firmware (either for the first time or as a firmware update) and/or configuration parameters

For example, if positioned or otherwise determined to function as a particular chain of an arm, the firmware associated with a selected generic component is flashed accordingly. The generic firmware also can be further configured prior to flashing.

Embodiments relating to security are now described.

In an optional embodiment, one or more firmware updates can be protected by using an encryption mechanism.

In an embodiment, the firmware upgrade is definitive (irreversible, e.g. by writing once the firmware). In an embodiment, the firmware flashing is reversible (read-write). In an embodiment, the firmware change is conditionally reversible (e.g. requiring encryption keys). In an embodiment, the firmware upgrade is protected by using an encryption mechanism (e.g. using a symmetric or even a public key encryption scheme).

De-specification and/or specification steps can be protected (by software encryption and/or mechanical measures of protection). For example, if a specified component is removed from a robot (for example for maintenance purposes), a factory reset can be required to be able to use said components again and/or in another robot. Some encryption mechanisms can prevent or authorize to implement a new function into a component.

In an embodiment, the methods and/or systems according to the invention can use one or more "bootloaders".

A "bootloader" is software which cannot be erased or otherwise modified by another circuit or part of the robot. A bootloader according to the invention generally can be executed by a processor present on the circuit of a component or board. It can flash firmware in a component. It also can check if a given firmware is compatible with its board and/or if said firmware is legit or genuine or safe or reliable (or to what extent it is acceptable, by performing comparisons and verifications). By using encryption mechanisms, a bootloader can conditionally authorize firmware flashing of one or more components (i.e. deletion of firmware of a specified component or flashing a new firmware in a generic component)

In an embodiment, a « bootloader » according to the invention requires symmetrical encryption (ciphering) key (e.g. AES) to enable/unlock the flashing of the associated firmware.

A symmetric-key algorithm uses the same cryptographic keys for both encryption of plaintext and decryption of ciphertext. The keys, in practice, represent a shared secret between two or more parties that can be used to maintain a private information link.

In an embodiment, each symmetric key is robot-dependent (and is not used in another robot). In other words, having a symmetric key of a robot A cannot be used to decrypt the firmware of a robot B. Following, in order to use a specified part of a robot B into a robot A, said specified part has to be de-specified by flashing a firmware with the symmetric key of the robot B; if successful, the bootloader can erase the former symmetric key of the robot B and install the new key of the robot A in the part of the robot B which afterwards becomes fully part of the robot A.

The use of an encryption mechanism thus enables to conditionally lock a firmware on a given circuit (by impeding the flashing of an unauthorized firmware). In an embodiment, a generic component according to the invention requires a predefined symmetric key (defined at manufacturing).

In an embodiment, an asymmetric encryption scheme can be used (public and private key-pair).

In an embodiment, a combination of symmetric and asymmetric encryption can be used.

With respect to security, for example in compliance with the standard ISO 13482, the network can also comprise one or more local masters (master nodes or master devices) which can control commands - and the correct execution of commands-provided by the global master. In case of failure of said global master, said local masters can hand over operations (for example to secure the robot, preventing the robots to fall on the ground or to perform dangerous moves which could injure human beings in vicinity of the robot). Such a plurality of local masters can be named "multi-masters". Such architectures can be implemented when a particular level of reliability is to be met (for example, when the robot is intended to interact with human users).

Particular embodiments relating to the storage of firmware are now described.

In an embodiment, the global master device stores necessary and sufficient data 521 to flash one or more generic components. In an embodiment, a generic component can comprise a persistent or otherwise non-volatile memory, enabling a decentralized storage of data 521 used for the specialization/specification of one or more generic components.

In an embodiment, each generic component comprises such a decentralized memory.

In an embodiment, at least a fraction of the generic components can comprise such a memory (adapted to store firmware for execution).

In an embodiment, at first startup or boot of the robot, a first calibration is performed: each generic component receives the necessary and sufficient information to perform its firmware update (the control is performed by the global master but the storage of the respective firmware and/or component data can optionally be decentralized, as described previously). Once flashed, relevant firmware data is stored by each relevant component and the entirety of the robot is then specified (and the next reboot can skip the calibration step).

In an embodiment, usage data (e.g. versioning, etc) can be stored in one or more memories associated with one or more components for example for maintenance purposes.

With respect to the use of a plurality of master devices ("multi-masters" architectures), embodiments relating to reflexes and preflexes are now described.

In some embodiments, master and slave devices according to the invention can enable "reflexes" and "preflexes".

A reflex action is an involuntary and nearly instantaneous movement in response to a stimulus. Reflexes sollicitate higher brain control (global master). Preflexes designate the latent capacities in the musculoskeletal system which auto-stabilize movements, generally with a zero-delay intrinsic feedback loop. Preflexes do not necessarily sollicitate higher brain controls (they can sollicite slave devices).

In an embodiment, the processing capabilities of the robot can be distributed in space, for example by enabling "preflexes" or "local" reflexes (without any intervention of the global master). In such an embodiment, a central pattern generator (CPG) can be implemented in each local component to spare computing resources of the global master.

The disclosed methods can take form of an entirely hardware embodiment (e.g. FPGA), an entirely software embodiment or an embodiment containing both hardware and software elements. Software embodiments include but are not limited to firmware, resident software, microcode, etc. The invention can take the form of a computer program product (e.g. software to guide or assist the manufacturing of a robot) accessible from a computer-usable or computer-readable medium providing program code for use by or in connection with a computer or any instruction execution system. A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

## Claims

1. A method of handling a robot comprising the steps of:
- discovering a plurality of generic components of the robot, said generic components being interconnected and non-functional;
- determining the spatial position of each generic component in the robot;
- retrieving respective firmware associated with each generic component;
- modifying a generic component into a specified component, by flashing said retrieved respective firmware to said generic component.

2. The method of claim 1, further comprising the step of receiving at least one special requirement associated with a generic component and further comprising the step of configuring the retrieved respective firmware associated with said generic component depending on said special requirement.

3. The method of any preceding claim, wherein the firmware flashing step is protected with an encryption mechanism.

4. The method of claim 3, wherein the encryption mechanism is a symmetric encryption scheme.

5. The method of claim 3, wherein the encryption mechanism is an asymmetric encryption scheme.

6. The method of any preceding claim, further comprising a step of storing the respective firmware associated with the one or more generic components, said storage being decentralized and/or distributed.

7. The method of claim 1, wherein the step of determining the spatial position of each generic component is performed by an external logic.

8. The method of any preceding claim, wherein the step of determining the spatial position of each generic component is performed by reference to a predefined map in a predefined hardware abstraction layer.

9. The method of claim 2, wherein the step of configuring a retrieved firmware is performed by reference to a predefined hardware abstraction layer.

10. The method of any preceding claim, wherein the step of determining the spatial position of each generic component is performed by iterative negotiations between generic component peers.

11. A computer program comprising instructions for carrying out the steps of the method according to any one of claim 1 to 10 when said computer program is executed on a suitable computer device.

12. A system comprising means adapted to carry out the steps of the method according to any one of claims 1 to 10.

13. The system of claim 12, comprising one or more generic components, said generic components being interconnected and in non-functional state in the robot; wherein a generic component comprises hardware electronics, said hardware electronics comprising a non volatile memory adapted to store firmware instructions, which when executed by a suitable processor cause said processor to perform the steps of any one of claims 1 to 8 and said hardware electronics comprising a boot loader conditionally authorizing firmware flashing.

14. The system of claim 13, further comprising a mechanical part.

15. The system of claim 14, wherein said mechanical part is associated with an articular chain selected from the group comprising a shoulder or an elbow or a wrist or a neck.

16. The system of claim 13, wherein a generic component is configured to interact with external sensors and actuators.

17. The system of any one of claims 12 to 16, comprising a global master device controlling a plurality of slave devices, said slave devices comprising one or more generic specified components.

18. The system of claim 17, comprising a plurality of interconnected global master devices.
